# EUROPÄISCHE PATENTSCHRIFT

(11) **EP 1 457 775 B1**
(45) Veröffentlichungstag und Bekanntmachung des Hinweises auf die Patenterteilung: **18.10.2006**
(21) Anmeldenummer: 04405125.8
(22) Anmeldetag: 02.03.2004
(51) Int. Cl.: G01N 30/60, F16L 11/12, F16L 33/28

(54) **Schlauch aus hochtemperaturbeständigem Kunststoff, Verfahren zur Gestaltung des Endes eines solchen Schlauches**
Hose made of high temperature resistant plastic material, method of forming the end of such a hose
Tuyau souple en matière plastique resistante à haute temperature, procédé pour former l'extrémité d'un tel tuyau souple

(30) Priorität: 10.03.2003 CH 3792003
(43) Veröffentlichungstag der Anmeldung: 15.09.2004
(73) Patentinhaber: Möller Feinmechanik GmbH & Co., 36043 Fulda (DE)
(72) Erfinder: Lampart, Kurt, 9630 Wattwil (CH); Reinhardt, Werner, 36137 Grossenlüder (DE); Frank, Michael, 36137 Grossenlüder (DE)
(74) Vertreter: Walder, Martin Bernhard

(56) Entgegenhaltungen:
- EP-A- 0 624 795
- EP-A- 0 698 789
- EP-A- 0 978 292
- US-A- 5 188 730
- US-A- 5 911 954
- US-A- 6 149 996
- US-A1- 2002 006 359

## Beschreibung

Die Erfindung betrifft einen Kunststoffschlauch mit einer rohrförmigen Wandung aus einem hochtemteraturbeständigen Kunststoff, namentlich aus PEEK, PAEK oder PEEKK. Die Erfindung betrifft weiter ein Verfahren zur Ausbildung eines Anschlusskopfes an einem Kunststoffschlauch mit einer Wandung aus einem hochtemperaturfesten Kunststoff, namentlich aus PEEK, PAEK oder PEEKK.

Im Laborbereich werden kleinste Mengen von Flüssigkeiten pipetiert und in Schläuchen und Rohren transportiert. Dazu sind in jüngster Zeit PEEK-Schläuche in Gebrauch gekommen, welche auch PEEK-Röhrchen genannt werden. Das Material dieser Schläuche oder Röhrchen ist Polyaryletheretherketon (Andere Quellen geben Polyetheretherketon an). Verwandte Materialien dazu sind Polyaryletherketon (PAEK) und Polyetheretherketonketon (PEEKK). Diese Materialien sind hochtemperaturbeständig und weitgehend resistent gegen den Einfluss von Chemikalien und Strahlen. Sie sind schwer entflammbar und weisen im Brand eine sehr geringe Rauchentwicklung auf. Sie besitzen ein günstiges Gleitverhalten und Verschleissverhalten. Bei Temperaturen über 334°C sind sie thermoplastisch verarbeitbar.

Solche Röhrchen oder Schläuche gibt es im Handel auch mit einer Glaskapillare darin.

Die EP 0 698 789A1 offenbart eine mit Polyimid beschichtete Glaskapillare, auf welche ein Überzug aus PEEK aufgespritzt ist. Diese Umspritzung bildet einen Mantel um einen Endbereich der Kapillare und besitzt eine Verdickung.

Die US 5,188,730 A zeigt eine Kapillare aus PEEK oder Metall, deren Ende mit einem Klemmring bestückt ist. Das Material dieses Klemmrings ist nicht spezifiziert. Wie dieser Klemmring an der Kapillare befestigt wird, ist in der Schrift nicht ausgeführt.

Ferner zeigt die US 6,149,996 A einen Kunststoffschlauches nach dem Oberbegriff von Anspruch 1 bzw. ein Verfahren nach dem Oberbegriff von Anspruch 9.

Es ist die Aufgabe der Erfindung, eine Lösung für den Anschluss eines solchen Röhrchens oder Schlauches an ein zweites Röhrchen, an einen Schlauch oder an ein Gerät vorzuschlagen.

**Erfindungsgemäss** wird die Lösung dieser Aufgabe bei einem Schlauch gemäss Anspruch 1 durch die kennzeichnenden Merkmale erreicht. Der Anschlusskopf zum Anschliessen des Kunststoffschlauches an einen Anschlusskopf eines Schlauch-Endes, Rohr-Endes oder Geräts, weist eine Verdickung der Wandung aus PEEK, PAEK oder PEEK auf, welche Verdickung durch ein Spritzgussverfahren angeformt ist. Diese Verdickung lässt sich mit einer Endfläche ausbilden, welche dicht an eine entsprechende Endfläche eines passenden Anschlusskopfes gepresst werden kann. Die Anpressung wird vorteilhaft über ein schraubbares Fitting erreicht.

Bei einem Verfahren gemäss dem Oberbegriff des unabhängigen Verfahrensanspruchs 9 wird die Aufgabe dadurch gelöst, dass eine Verdickung der Wandung aus PEEK, PAEK oder PEEK mittels Spritzgiessen angeformt wird. Das Umspritzen des Kunststoffröhrchens mit einem Material mit ähnlichem Temperaturverhalten und ähnlicher Struktur erlaubt eine Verbindung des Materials der Wandung mit dem Material der Verdickung. Das Material der Wandung wird vom heiss um die Wandung in eine Form gespritzten Material für die Verdickung aufgeweicht. Aufgrund des erreichten Zusammenhalts zwischen Schlauch und Umspritzung wird angenommen, dass sich eine molekulare Verbindung des Materials der Wandung mit dem eingespritzten Material einstellt.

Damit der Innendurchmesser des Kunststoffschlauches nach dem Anbringen der Verdickung unverändert ist, ist der Innendurchmesser vorteilhaft durch eine Glaskapillare oder durch einen Dorn der Gussform gesichert.

Vorteilhaft ist daher eine Glaskapillare ummantelt vom Schlauch. Die Glaskapillare kann einen Innendurchmesser von bis zu 0.05 mm aufweisen. Diese Glaskapillare erfährt, im Gegensatz zur Kunststoffummantelung, keine Längenveränderung durch die Erwärmung und Abkühlung beim Anbringen der Verdickung. Die Wandung des Kunststoffschlauches hingegen zieht sich beim Auskühlen zusammen. Daher übersteht die anfänglich fluchtend abgelängte Glaskapillare nach dem Anbringen des Anschlusskopfes ihren Kunststoffmantel in Längsrichtung um einen Minimalbetrag. Diese Länge der Glaskapillare kann anschliessend an die Ausbildung des Anschlusskopfes vorteilhaft fluchtend und ebenflächig mit einer Endfläche des Anschlusskopfes abgelängt werden.

Vorteilhafte Innendurchmesser der Glaskapillare oder des Schlauches sind kleiner als 0.5 mm. Bevorzugt ist der Innendurchmesser kleiner als 0.3 mm, besonders bevorzugt kleiner als 0.2. Durch die Ausbildung eines Anschlusskopfes am Kunststoffschlauch ist auch bei so winzigen Querschnitten praktisch eine totwassereckenminimierte Verbindung möglich. Für kleinere Innendurchmesser sind vorteilhaft Glaskapillaren im Kunststoffschlauch vorhanden. Diese Glaskapillare weist vorteilhaft einen Innendurchmesser auf von höchstens 0.2 mm, bevorzugt von höchstens 0.1, besonders bevorzugt von höchstens 0.05mm.

Die Verdickung der Schlauchwandung besteht aus PEEK, PAEK oder PEEKK. Besonders bevorzugt sind die Schlauchwandung und die Verdickung aus dem selben Kunststoff. Wesentlich ist dabei, dass das Material der Verdickung und das Material der Schlauchwandung ähnliche Schmelzpunkte aufweisen und beim Umspritzen der Schlauchwandung sich miteinander verbinden.

Damit die Verbindung über eine möglichst grosse Fläche stattfinden kann, ist die Verdickung auf der Aussenseite der Schlauchwandung ausgebildet. Das Schlauchende kann dabei an einer Gussformwandung anstehen oder gegenüber dieser auf einem Dorn der Gussform zurückgesetzt sein. Durch die Hitze des eingespritzten Materials schmilzt die Oberfläche der Wandung und verbindet sich mit dem eingespritzten flüssigen Kunststoff. Die Materialien der Schlauchwandung und der Verdickung der Schlauchwandung sind danach vorteilhaft molekular verbunden. Dadurch ist keine Verbindungsfläche mehr vorhanden, sondern Verdickung und Schlauchwandung sind praktisch einstückig.

Damit der Aussendurchmesser der Verdickung konzentrisch zum Innendurchmesser ausgebildet ist, wird vorteilhaft an der Gussform ein Dorn vorgesehen, der während dem Spritzgiessen in die Öffnung des Schlauches eingeführt ist. Dieser Dorn richtet daher den Innendurchmesser konzentrisch zur Spritzgussform aus. Dadurch lässt sich der Anschlusskopf exakt konzentrisch zum Innendurchmesser angiessen.

### Kurzbeschreibung der Figuren:

Es zeigt
- Fig. 1: einen Längsschnitt durch einen erfindungsgemässen Anschlusskopf an einem PEEK-Schlauch,
- Fig. 2: einen Längsschnitt durch einen erfindungsgemässen Anschlusskopf in einer Spritzgussform,
- Fig. 3: einen Längsschnitt durch einen PEEK-Schlauch mit einer Glaskapillare und einem Anschlusskopf nach der Entnahme aus der Form,
- Fig. 4: einen Längsschnitt durch einen PEEK-Schlauch mit einer Glaskapillare und einem Anschlusskopf gemäss Figur 3, jedoch mit abgelängter Glaskapillare,
- Fig. 5: einen Längsschnitt durch zwei miteinander verschraubte Anschlussköpfe.

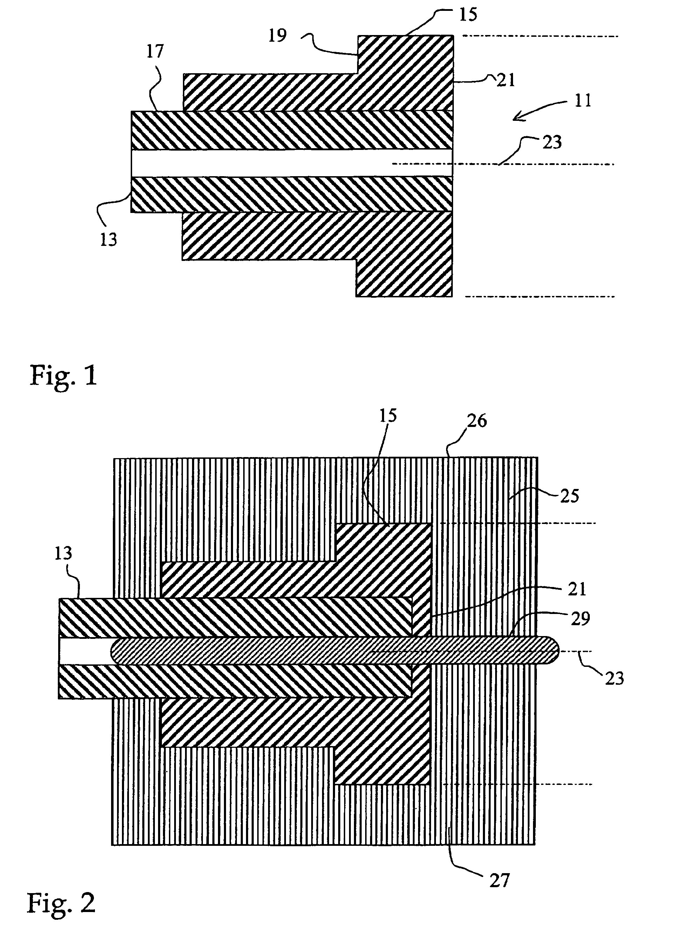

Der in Figur 1 dargestellte Anschlusskopf 11 am Ende eines PEEK-Röhrchens 13 bildet eine Verdickung 15 der Wandung 17 des Röhrchens 13. Das Material der Verdickung 15 und der Wandung 17 ist dasselbe. Entgegen der Darstellung ist daher an der Verbindungsstelle zwischen Wandung 17 und Verdickung 15 in Wirklichkeit keine deutliche Trennlinie erkennbar. Das Material der Verdickung und der Wandung sind molekular verbunden. Damit diese Verbindung über ein grössere Fläche stattfinden kann, kann die Aussenfläche des Röhrchen 13 auch gerillt werden. Die Verdickung 15 weist einen Endbereich mit einem grösseren Aussendurchmesser und einen weiter vom Ende des Röhrchens entfernten Bereich mit einem geringeren Aussendurchmesser auf. Auf diese Weise ist ein Kragen 19 ausgebildet, der mit einem Fitting gegen eine Anpressfläche gepresst werden kann. Die Endfläche 21 des Anschlusskopfes 11 ist ebenflächig und senkrecht zur Achse 23 des Röhrchens. Die Achse 23 des Röhrchens 13 ist zentrisch zum Innendurchmesser des Röhrchens angenommen. Der Aussendurchmesser der Verdickung 15 ist konzentrisch zur Achse des Röhrchens ausgeformt.

In Figur 2 ist ein Anschlusskopf 11 gemäss Figur 1 in der Gussform 25 dargestellt. Die Gussform 25 weist zwei oder mehrere perifere Teilformen 26,27 und einen zentralen Dorn 29 auf. Der Durchmesser des Dorns 29 ist auf den Innendurchmesser des Röhrchens 13 abgestimmt. Er ist in das Röhrchen 13 eingeführt und sichert so die Masshaltigkeit des Innendurchmessers. Durch das Umgiessen des Röhrchens 13 wird dieses erweicht und teilweise verflüssigt. Beim Abkühlen der Verdickung 15 zieht sich der Kunststoff zusammen. Dabei ergibt sich eine Längenveränderung des Anschlusskopfes 11. Da die Wandung 17 des Röhrchens 13 mit der Verdickung verbunden ist, zieht sich auch das Röhrchen in der Länge zusammen, soweit es von der Verdickung umgeben ist.

Da das Material der Verdickung dasselbe ist wie das Material der Rohrwandung 17, ist es nicht erheblich, ob das Rohr bis zur Endfläche 21 des Anschlusskopfes 11 reicht oder nicht. Das Röhrchen 13 muss lediglich um eine bestimmte Länge in die Form hineinragen. Ein Abstand zwischen Röhrchen-Ende und Endfläche wird durch die Umspritzung aufgefüllt und damit ergänzt. Die Länge, über welche sich die Umspritzung und die Rohrwandung gemeinsam erstrecken, muss dabei garantieren, dass eine genügende Verbindung mit dem Material der Verdickung entsteht. Da eine nachträgliche Verbindung, auch wenn sie molekular ist, nicht die gleichen Eigenschaften aufweist, wie sie durch eine durchgehende Polymerisation erreicht werden, muss eine genügend grosse Oberfläche angeboten werden.

Da der Dorn 29 zentrisch in der Gussform angeordnet ist, ist die Aussenform des Anschlusskopfes 11 zentrisch zum Innendurchmesser des Röhrchens angeordnet. Diese Zentrizität garantiert eine sehr präzise, axiale Ausrichtung von zwei Anschlussköpfen zueinander und dadurch auch der Innendurchmesser der aneinander anschliessenden Teile zueinander.

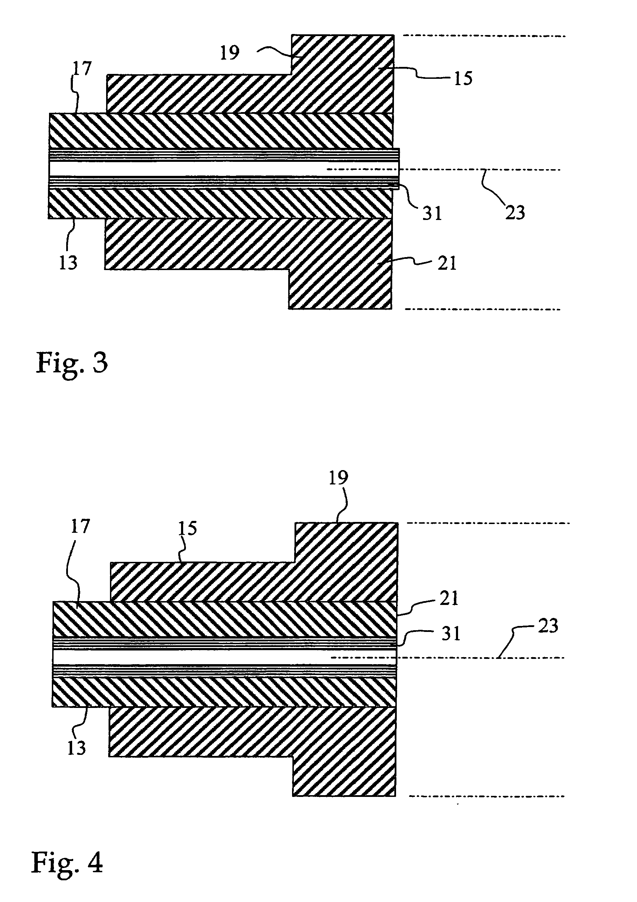

Der beschriebene Schwund des Kunststoffteils beim Abkühlen erfasst natürlich ein darin vorliegendes Glasröhrchen nicht. Eine Glaskapillare 31, die in einem PEEK-Röhrchen 13 vorliegt, ist in Figur 3 dargestellt. Nach dem Abkühlen des Anschlusskopfes 11 übersteht die Glaskapillare 31 die Endfläche 21. Es kann vorgesehen sein, dass beim Verbinden von zwei Anschlussköpfen die Kunststoffummantelung der Glaskapillare gestreckt wird um den Betrag, um den die Glaskapillare 31 die Endfläche 21 übersteht. Vorteilhaft wird jedoch die Glaskapillare gekürzt um diesen Betrag. Ein Anschlusskopf mit gekürzter Glaskapillare ist in Figur 4 dargestellt.

Bei allen Beispielen ist die Verdickung am Innendurchmesser des PEEK-Röhrchens ausgerichtet. Dadurch können Unregelmässigkeiten in der Wandungsdicke der Röhrchen ausgeglichen werden. Dies ermöglicht eine sehr präzise, praktisch totwassereckenfreie Verbindung zwischen zwei Anschlussköpfen 11.

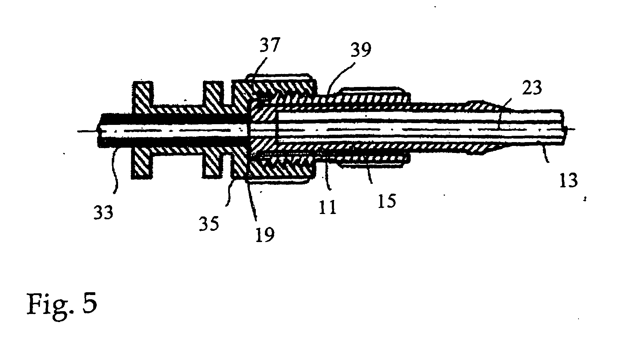

In Figur 5 ist ein Anschlusskopf eines PEEK-Röhrchens 13 an eine Mikro-Pipettiernadel 33 angeschlossen. Die Pipettiernadel 33 weist ein Röhrchen auf, dessen Innendurchmesser dem Innendurchmesser des PEEK-Röhrchens 13 entspricht. Die Anschlussköpfe 11 und 35 von PEEK-Röhrchen 13 und Pipettiernadel 33 weisen zusammenwirkende Passteile 37 und 19 auf, die eine Zentrierung der Innendurchmesser aufeinander sicherstellen. Am Anschlusskopf 35 der Pipettiernadel 33 ist ein Innengewinde ausgebildet, in welches ein Fitting 39 eingeschraubt ist. Das Fitting liegt von aussen an der Verdickung 15 an und presst gegen den Kragen 19. Das Fitting 39 ist um die Verdickung 15 verdrehbar, so dass der Anschlusskopf 11 beim Verschrauben der Anschlussköpfe gegeneinander nicht verdreht zu werden braucht.

## Patentansprüche

1. Kunststoffschlauch (13) mit einer rohrförmigen Wandung (17) aus PEEK, PAEK oder PEEKK, und einem Anschlusskopf (11) zum Anschliessen des Kunststoffschlauches (13) an einen Anschlusskopf eines Schlauch-Endes, Rohr-Endes oder Geräts, welcher Anschlusskopf (11) eine Verdickung der Wandung (17) des Kunststoffschlauches (13) aufweist wobei die Verdickung eine auf die Aussenseite der Wandung (17) angeformte Umspritzung ist **dadurch gekennzeichnet, dass** die Verdickung (15) aus PEEK, PAEK oder PEEKK besteht.

2. Kunststoffschlauch (13) nach Anspruch 1, **dadurch gekennzeichnet, dass** die Verdickung. (15) aus dem selben hochtemperaturfesten Kunststoff wie die Wandung (17) des Kunststofhchlauches (13) besteht.

3. Kunststoffschlauch nach Anspruch 1 oder 2, **dadurch gekennzeichnet, dass** eine Glaskapillare (31) vom Schlauch (13) ummantelt ist.

4. Kunststoffschlauch nach einem der Ansprüche 1 bis 3, **dadurch gekennzeichnet, dass** der Innendurchmesser der Glaskapillare (31) oder des Schlauches (13) kleiner als 0.5 mm ist, vorteilhaft kleiner als 0.3 mm ist, besonders bevorzugt kleiner als 0.2.

5. Kunststoffschlauch nach einem der Ansprüche 3 oder 4, **dadurch gekennzeichnet, dass** die Glaskapillare (31) einen Innendurchmesser von höchstens 0.2 mm, vorzugsweise höchstens 0.1, besonders bevorzugt von höchstens 0.05mm aufweist.

6. Kunststoffschlauch nach einem der Ansprüche 1 bis 5, **dadurch gekennzeichnet, dass** die Materialien der Schlauchwandung (17) und der Verdickung der Schlauchwandung (15) molekular verbunden sind.

7. Kunststoffschlauch nach einem der Ansprüche 3 bis 5, **dadurch gekennzeichnet, dass** die Glaskapillare (31) ebenflächig und mit einer Endfläche (21) des Anschlusskopfs (11) fluchtend abgelängt ist

8. Kunststoffschlauch nach einem der Ansprüche 1 bis 7, **dadurch gekennzeichnet, dass** der Aussendurchmesser der Verdickung (15) konzentrisch zum Innendurchmesser ausgebildet ist.

9. Verfahren zur Ausbildung eines Anschlusskopfes (11) an einem Kunststoffschlauch (13) aus PEEK, PAEK oder PEEKK, **dadurch gekennzeichnet, dass** durch Umspritzen des Kunststoffschlauches (13) eine Verdickung (15) aus PEEK, PAEK oder PEEKK auf die Aussenseite der Wandung (17) des Schlauchs (13) angeformt wird.

10. Verfahren nach Anspruch 9, **dadurch gekennzeichnet, dass** die Verdickung (15) aus dem selben Material gegossen wird, aus dem die Wandung (17) des Kunststoffschlauchs (13) besteht.

11. Verfahren nach Anspruch 9 oder 10, **dadurch gekennzeichnet, dass** eine im Kunststoffschlauch (13) vorliegende Glaskapillare (31) nachträglich abgelängt wird.

12. Verfahren nach Anspruch 11, **dadurch gekennzeichnet, dass** eine Spritzgussform (25) mit einem Dorn (29) am Innendurchmesser des Schlauches (13) bzw. der Glaskapillare (31) ausgerichtet wird.

## Claims

1. A plastic hose (13) with a tubular wall (17) from PEEK, PAEK, or PEEKK and with a connector head (11) for connecting the plastic hose (13) to a connector head of a hose end, tube-end or device, wherein the connector head (11) comprises a expansion of the wall (17) of the plastic hose (13) -
**characterized in, that**
the expansion (15) consists of PEEK, PAEK, or PEEKK, wherein the expansion is molded onto the outside of the wall (17).

2. A plastic hose according to claim 1, **characterized in, that**
the expansion (15) consists of the same high temperature resistant plastic as the wall (17) of the plastic hose (13).

3. A plastic hose according to claim 1 or 2, **characterized in, that**
a glass capillary tube (31) is encapsulated by the hose (13).

4. A plastic hose according to one the claims 1 through 3,
**characterized in, that**
the interior diameter of the glass capillary tube (31) or the hose (13) is smaller than 0.5 mm, preferably smaller than 0.3 mm, in particular preferably smaller than 0.2 mm.

5. A plastic hose according to one of the claims 3 or 4,
**characterized in, that**
the glass capillary tube (31) has an interior diameter of a maximum of 0.2 mm, preferably a maximum of 0.1 mm, in particular preferably a maximum of 0.05 mm.

6. A plastic hose according to one of the claims 1 through 5,
**characterized in, that**
the materials of the hose wall (17) and the expansion of the hose wall (15) are connected on a molecular level.

7. A plastic hose according to one of the claims 3 through 5,
**characterized in, that**
the glass capillary tube (31) is sized flush with an end surface (21) of the connection head (11).

8. A plastic hose according to one of the claims 1-7 **characterized in, that** the exterior diameter of the expansion (15) is concentric to the interior diameter.

9. A process for providing a connection head (11) on a plastic hose (13) from PEEK, PAEK, or PEEKK, **characterized in, that**
an expansion (15) from PEEK, PAEK, or PEEKK is added onto the outside of the wall (17) of the hose (13) through molding.

10. A process according to claim 9, **characterized in, that**
the expansion (15) is molded from the same material, from which the wall (17) of the plastic hose (13) is made.

11. A process according to claim 9 or 10, **characterized in, that**
a glass capillary tube (31) located in the plastic hose (13) is sized subsequently.

12. A process according to claim 11, **characterized in, that**
an injection mold (25) is aligned to the interior diameter of the hose (13) or the glass capillary tube (31) by a bolt (29).

## Revendications

1. Tuyau flexible en matière synthétique (13) avec une paroi tubulaire (17) en PEEK, PAEK ou PEEKK et une tête de branchement (11) pour brancher le tuyau flexible en matière synthétique (13) à une tête de branchement d'une extrémité de tuyau flexible, extrémité de tube ou d'un appareil, laquelle tête de branchement (11) présente un épaississement de la paroi (17) du tuyau flexible en matière synthétique (13), l'épaississement étant un enrobage par extrusion moulé sur le côté extérieur de la paroi (17), **caractérisé en ce que** l'épaississement (15) est en PEEK, PAEK ou PEEKK.

2. Tuyau flexible en matière synthétique (13) selon la revendication 1, **caractérisé en ce que** l'épaississement (15) est constitué par la même matière synthétique résistante aux très hautes températures que la paroi (17) du tuyau flexible en matière synthétique (13).

3. Tuyau flexible en matière synthétique selon la revendication 1 ou 2, **caractérisé en ce qu'**un capillaire en verre (31) est gainé par le tuyau flexible (13).

4. Tuyau flexible en matière synthétique selon l'une des revendications 1 à 3, **caractérisé en ce que** le diamètre intérieur du capillaire en verre (31) ou du tuyau flexible (13) est inférieur à 0,5 mm, de manière avantageuse inférieur à 0,3 mm, de manière particulièrement préférée inférieur à 0,2.

5. Tuyau flexible en matière synthétique selon l'une des revendications 3 ou 4, **caractérisé en ce que** le capillaire de verre (31) présente un diamètre intérieur de 0,2 mm maximum, de préférence de 0,1 mm maximum, de manière particulièrement préférée de 0,05 mm maximum.

6. Tuyau flexible en matière synthétique selon l'une des revendications 1 à 5, **caractérisé en ce que** les matériaux de la paroi du tuyau flexible (17) et de l'épaississement de la paroi du tuyau flexible (15) sont reliés sur le plan moléculaire.

7. Tuyau flexible selon l'une des revendications 3 à 5, **caractérisé en ce que** le capillaire en verre (31) est de surface plane et est coupé à longueur en alignement avec une surface d'extrémité (21) de la tête de branchement (11).

8. Tuyau flexible selon l'une des revendications 1 à 7, **caractérisé en ce que** le diamètre extérieur de l'épaississement (15) est configuré concentrique par rapport au diamètre intérieur.

9. Procédé pour configurer une tête de branchement (11) sur un tuyau flexible en matière synthétique (13) en PEEK, PAEK ou PEEKK, **caractérisé en ce qu'**un épaississement (15) en PEEK, PAEK ou PEEKK est moulé sur le côté extérieur de la paroi (17) du tuyau flexible (13) par enrobage par extrusion du tuyau flexible en matière synthétique (13).

10. Procédé selon la revendication 9, **caractérisé en ce que** l'épaississement (15) est coulé dans le même matériau que la paroi (17) du tuyau flexible en matière synthétique (13).

11. Procédé selon la revendication 9 ou 10, **caractérisé en ce qu'**un capillaire de verre qui existe dans le tuyau flexible en matière synthétique (13) est coupé à longueur ultérieurement.

12. Procédé selon la revendication 11, **caractérisé en ce qu'**un moule de moulage par injection (25) avec un mandrin (29) est aligné sur le diamètre intérieur du tuyau flexible (13) ou du capillaire en verre (31).
